# EUROPEAN PATENT APPLICATION

(11) **EP 2 417 855 A1**
(43) Date of publication of application: **15.02.2012**
(21) Application number: 11425056.6
(22) Date of filing: 08.03.2011
(51) Int. Cl.: A21D 13/00, A23L 1/29

(54) **High Protein Slimming Pizza**

(30) Priority: 12.08.2010 IT LI20100007
(71) Applicant: Polzella, Antonio, 57016 Rosignano Marittimo - Fraz. Vada (IT)
(72) Inventor: Galgani, Riccardo, 57023 Cecina (IT); Polzella, Antonio, 57016 Rosignano Marittimo FRAZ. Vada (IT)
(74) Representative: Celestino, Marco

(57) **Abstract**

High protein pizza with very low carbohydrate content rich in fibre, with a low glycaemic index and low salt content, free from preservative or chemical additives. Its composition and particular cooking procedure make for an excellent pizza that is suited to dieting.

## Description

High protein pizza with very low carbohydrate content rich in fibre, with a low glycaemic index and low salt content, free from preservative or chemical additives. Its composition and particular cooking procedure make for an excellent pizza that is suited to dieting.

The product for which we are seeking a patent is a pizza whose particular combination of ingredients and innovative method of cooking, which is short and intense, means there is little change to the physiology of the phytonutrients used in making the pizza. The primary innovative feature that makes this pizza unique and revolutionary is that its properties make it more suitable for slimming than traditional pizza; indeed the latter is notoriously known as being far from suitable for slimming and the excessive consumption of pizza can lead to a considerable and unwanted increase in weight.

Instead, high-protein slimming pizza is entirely different, both in its composition and its preparation, from all other existing pizzas, including those used by sportspeople. Traditional pizza is rich in carbohydrates and sugars and has a much lower protein content than slimming pizza. This pizza is therefore a food that can be recommended and used in a far broader range of diets; from low-calorie diets to those used by sportspeople for their fitness as well as being a fast food. This feature is supplemented by the new MAP technique for preserving foods which makes it possible to package the pizza whilst maintaining its original fragrance and taste unaltered, thus it can be eaten as a simple snack after it has been reheated in an oven.

### INGREDIENTS:

100 g Low-fat Greek yoghurt
30 g soya protein (90%)
20 g Dried egg white
30 g Organic plain flour
10 g Whole-wheat flour
20 g New potatoes (solanum tuberosum) or Vivaldi (high calorie potato)
50g Courgette
1/3 g Fresh yeast (dried yeast or instant dried yeast 0,45g / 1,2g)
1 g Açaí Berry
Hyposodic and Iodized salt, as required
160/180 g Peeled tomatoes
NUTRITIONAL INFORMATION ON THE INGREDIENTS: (the values indicated are per 100 g)
Low-fat Greek yoghurt: carbohydrates 4 g, proteins 9 g, fats 0 g
Soya protein 90 % : carbohydrates 0,5 g, proteins 90 g, fats 3,6 g (OGM free)
Dried egg white: proteins > 82 g,
Organic plain white flour 0/00: carbohydrates 71 g, proteins 11 g, fats 1 g, fibre >1 g
Whole-wheat flour: carbohydrates 61 g, proteins 16 g, fats 1,99 g, fibre 1,80 g
New potatoes: carbohydrates 15,71 g, proteins 1,68 g, fats 0,1 g, fibre 2,4 g
Vivaldi potato 1/3 of carbohydrate
Courgette: carbohydrates 3,11 g, proteins 2,71 g, fats 0,4 g, fibre 1,1 g
Fresh yeast (dried): carbohydrates 18,1 g (if dried 41,22 g ), proteins 8,4 g (if dried 40,44 g), fats
1,9 g (if dried 7,61 g), fibre 8,1 g (if dried 26,9 g)
Açaí Berry and Hyposodic and Iodized salt, as required
Peeled tomatoes: carbohydrates 2,6 g, proteins 1,1 g, fats 0,5 g, fibre 0,9 g

### PREPARATION FOR THE PIZZA

Crumble the fresh beer yeast in a bowl with the low-fat Greek yoghurt (if using dried yeast: dissolve this in a tablespoon of water at 37°C to activate it). Add the soya protein and dried egg white. Add the previously liquidised courgette after removing its excess water. Add the two types of fiour: whole wheat and 0/00 organic plain white. Add the potatoes after cooking them in a wood/electric/gas oven for at least 40 minutes for 260/280° and leave them to cool and puree them.

Add the Açaí Berry and mix thoroughly until the ingredients form a even dough. Finally, add the hyposodic iodized salt as required. The dough must be compact, soft and elastic, (similar to an ear lobe). Once the dough is ready make a single ball of dough and leave to sit for 15/30 minutes at room temperature and depending on the season follow these indications: in cooler weather the dough will take longer to rise (about 30 minutes) and in warmer weather the time will be shorter (about 15 minutes). Make round balls, each weighing about 250 g, leave these to rise for 3/4 hours (depending on the season and the conditions as described above). Pre-heat the wood/electric/gas oven to a temperature of between 270° and 290°C. Once the dough has stopped rising (it should double in size) start to gently flatten the dough on the kitchen top (DO NOT ROLL IT OUT). High protein slimming pizza must only be shaped by squashing the dough from the top to the bottom and applying continual pressure with your hands.

Try to flatten the pizza from the middle outwards but not the 4/5 mm closest to the edge. If the edge is thicker it will keep its fragrance and not dry during cooking.

After having rolled out the dough add the peeled tomato, previously mixed with a mixer or use tomato paste that has been lightly seasoned (preferably at least 24 hours beforehand) with hyposodic and iodized salt as required, (add a sprig of fresh oregano) - apply the tomato beginning from the centre and working in a spiral outwards.

Once the pizza has cooked (about 4/5 minutes) take it out of the oven and place it in a suitable container before placing it in blast freezer until it reaches a temperature of + 2/4°C. Finally, package it with the new MAP system(modified atmosphere packaging) with carbon dioxide/nitrogen in a percentage of 15 to 30% for the carbon dioxide and 70 to 85 % for the nitrogen. This innovative packaging system enables us to satisfy two increasingly important objectives; the first is to extend the product's shelf life and the second means it is possible to reduce the number of additives used.

Packaging with modified atmosphere satisfies both these objectives and is becoming increasingly used in both Europe and oversees. It involves modifying the atmosphere around the food product within the packaging. In this way, it is possible to control the chemical, enzyme and microbiological processes; thereby reducing and eliminating the main forms of spoiling.

## Claims

1. **Patent 1: Ingredients for high-protein sliming pizza:**
100 g Low-fat Greek yoghurt
30 g 90% soya protein
20 g Dried egg white
30 g Organic plain flour
10 g Whole-wheat flour
20 g New potatoes (solanum tuberosum) or Vivaldi (high calorie potato)
50 g Courgette
1/3 g Fresh yeast (dried yeast or instant dried yeast 0.45/1.2g)
1 g Açaí Berry
Hyposodic and Iodized salt, as required
160/180 g Peeled tomatoes

2. **PREPARATION FOR PATENT NUMBER 2: (AS FOR NUMBER 1).**
a) crumble the fresh beer yeast in a bowl with the low-fat Greek yoghurt (if using dried yeast: dissolve this in a tablespoon of water 37 ° to activate it).
b) add the soya protein and dried egg white
c) add the liquidised courgette after removing its excess water
d) add the two types of flour: whole wheat and 0/00 organic plain
e) add the potatoes after cooking them in a wood/electric/gas oven for at least 40 minutes 260/280° and leaving them to cool
f) add the Açaí berry
g) mix the ingredients thoroughly and energetically until a homogeneous dough is obtained
h) finally add the hyposodic and iodized salt, as required
i) the dough must have a compact, soft and elastic consistency - a bit like an ear lobe
j) make a single ball of dough and leave to sit for 15/30 minutes at room temperature and according to the season follow these indications: in cooler weather the dough will take longer to rise (about 30 minutes) and in warmer weather the time will be shorter (about 15 minutes).
k) Make round balls, each weighing about 250 g, leave these to rise for 3/4 hours (depending on the season and the conditions as described above).
l) Pre-heat the wood/electric/gas oven to a temperature of between 270° and 290°.
m) Once the dough has stopped rising (it should double in size) start to gradually flatten the dough (DO NOT ROLL IT OUT).
n) Squash the dough from the top downwards, applying continual pressure with your hands. Try to flatten out the inside of the pizza and not the 4/5 mm towards the edges of the dough circle.
o) Add the peeled tomato, previously mixed with a whip or use tomato paste that has been lightly seasoned (preferably at least 24 hours beforehand) with hyposodic and iodized salt as required, add a sprig of fresh oregano) beginning from the centre and working in a spiral outwards.
p) Take the cooked pizza out of the oven and place it in a suitable container for about 4/5 minutes before placing it in blast freezer until it reaches a temperature of +2/4°.
q) Seal the pizza in M.A.P. modified atmospheric packaging with carbon dioxide/nitrogen in percentages that vary from 15 to 30% carbon dioxide and 70 to 85% of nitrogen.
